# EUROPEAN PATENT SPECIFICATION

(11) **EP 3 191 653 B1**
(45) Date of publication and mention of the grant of the patent: **26.02.2020**
(21) Application number: 15766931.8
(22) Date of filing: 11.09.2015
(51) Int. Cl.: E03D 1/08, E03D 1/14, E03D 1/06, E03D 1/30, E03D 1/32, E03D 1/34, E03D 1/36, F16K 31/34, F16K 31/385

(54) **VALVE ASSEMBLY**
VENTILANORDNUNG
ENSEMBLE ROBINET

(30) Priority: 12.09.2014 WO PCT/GB2014/052762; 23.09.2014 GB 201416802
(43) Date of publication of application: 19.07.2017
(73) Proprietor: Thomas Dudley Limited, Dudley West Midlands DY1 4SN (GB)
(72) Inventor: DUDLEY, Martin, Dudley West Midlands DY1 4SN (GB); HOLMES, Robert Andrew, Dudley West Midlands DY1 4SN (GB)
(74) Representative: HGF Limited
(86) International application number: PCT/GB2015/052644
(87) International publication number: WO 2016/038392

(56) References cited:
- EP-A1- 2 615 217
- WO-A1-03/021051
- FR-A1- 2 849 076
- GB-A- 1 314 831
- GB-A- 2 332 731
- GB-A- 2 438 523

## Description

This invention relates to fill valve assemblies and more particularly to a fill valve assembly for use in flushing cisterns. More specifically, although not exclusively, this invention relates to fill valve assemblies for use with flushing systems incorporating a draining syphon or other flushing valves.

Typical cistern draining syphons include an inverted generally U shaped duct having an upleg and a downleg, the upleg being provided with an enlarged chamber having a lower end open to the interior of the cistern in use. The downleg generally forms or is connected to an outlet of the cistern in use for delivery of flushing water to an associated toilet pan or the like. Within the chamber is located a vertically displaceable piston, normally incorporating a flexible diaphragm of, for example, rubber or plastics material. The piston acts as a one way valve and is movable in the chamber to initiate a syphonic flushing action, thereby discharging water from the cistern in operation.

Draining syphons of this kind are generally operated by a lever whose end is connected to a piston rod attached to the piston such that actuation of the lever raises the piston, thereby raising the level of water within the syphon over the bight of the U and priming the syphon to initiate the syphonic action. Actuation of the piston requires a significant amount of force as it involves displacing a considerable volume of water.

It is a non-exclusive object of the invention to provide a draining system with one or more components that overcomes or at least mitigates the issues associated with known systems. It is a more general non-exclusive object of the invention to provide an improved cistern draining system.

According to one aspect of the present invention there is provided a fill valve assembly for inclusion into a cistern flushing system, the assembly comprising a float operated equilibrium valve for refilling the cistern and a branch element fluidly connected upstream the float operated equilibrium valve, wherein the branch element includes an outlet for providing, in use, fluid flow to a hydraulic actuator of the cistern flushing system.

The cistern flushing system may comprise a syphon assembly as described below or a different type of flushing valve. The branch element may be integral with the fill valve assembly, for example such that the assembly is provided as a unitary structure, e.g. with a unitary or common housing, which may be provided in two or more parts secured together as a unitary structure.

The branch element may extend from the fill valve assembly, for example at an angle which may be a right angle with respect to the flow direction, e.g. horizontally in use. The fill valve assembly may comprise two or more outlets, each of which may be at different positions and/or orientations on or in the fill valve assembly, for example wherein the branch element may be selectively connected or operatively or fluidly connected to one of the outlets. In embodiments, the fill valve assembly comprises two outlets on opposed portions or sides of the fill valve assembly, for example such that the branch element may be connected to the fill valve assembly at one of its sides and/or in one of two orientations, e.g. which orientations may be at a straight or 180° angle with respect to one another.

The fill valve assembly may comprise one outlet on either of its sides for cooperative and/or sealing engagement with an inlet or inlet member of the branch element. The fill valve assembly may further comprise a clamp element for securing the branch element or the inlet or inlet member thereof to the fill valve assembly or to one of its sides and/or in cooperative engagement and/or with respect to one of the outlets. The branch element may be reversible.

In some embodiments, the branch element or inlet or inlet member may comprise an inlet spigot and/or may comprise a portion that is receivable within or that receives at least a portion of one of the outlets. The branch element or inlet or inlet member or spigot or portion thereof may comprise a flange or groove, for example a circumferential flange or groove, for engaging with the clamp element. The clamp element may be shaped to match the contours of at least a portion of the branch element or inlet or inlet member or inlet spigot or flange or groove. The clamp element may comprise a receptacle, for example a U-shaped or C-shaped receptacle, which may have an undersized neck, e.g. to provide a snap fit with a portion of the branch element or inlet or inlet member or inlet spigot. Preferably, the clamp element comprises two receptacles each for connecting and/or securing the branch element to one of the two outlets. The clamp element may comprise one or more flanges, e.g. inwardly extending radial flanges, for cooperation with the aforesaid portion. The or at least one of the or each radial flange may extend inwardly, for example from a respective hollow portion, which may be part cylindrical, and/or may be U-shaped or C-shaped and/or circumscribe more than half or 180° and/or may include a lead-in, e.g. to facilitate insertion.

In other embodiments, the branch element or inlet or inlet member may comprise a receptacle or ring portion within which is received one or both of the outlets. The branch element or inlet or inlet member may be connectable in one of two or more orientations, for example a first orientation in which the branch element is aligned at least partially with a first of the outlets and/or a second orientation in which the branch element is aligned at least partially with a second of the outlets. The branch element may comprise locating means, such as a locating flange or recess, that may be configured to cooperate with a locating means, such as a locating recess or flange, on or of the fill valve assembly or a housing thereof or the float operated equilibrium valve.

The assembly or branch element may comprise a non-return means or valve or a restriction means, e.g. a flow restrictor, and/or a filter and/or an outlet that may include a push fit fitting. The fill valve may comprise a float pivotally mounted with respect to the float operated equilibrium valve, for example via a lever that may selectively close a bleed port of the equilibrium valve to selectively open and/or close the equilibrium valve.

The flushing system may comprise a syphon assembly for discharging water from a cistern, the assembly comprising an inverted generally U shaped duct having an upleg and a downleg, an open-ended, e.g. enlarged, chamber fluidly connected to the upleg, a piston movable in the chamber and a hydraulic actuator operatively connected to the piston, wherein the actuator is fluidly connected to the fill valve assembly via the branch element and is operable to move, in use, the piston, or at least assist in the movement thereof, within the chamber to initiate a syphonic flushing action, for example under the influence of an external source of power.

The use of a fluid-driven actuator to operate the piston obviates the need to apply substantial force to initiate the flush.

In some embodiments, the syphon assembly comprises a flush activator in the form of a push button or lever that is operatively and/or mechanically connected to the piston, for example to raise the piston, e.g. thereby to initiate the syphonic flushing action. In such embodiments, the syphon assembly may comprise a mechanism for moving or raising the piston and/or the actuator may be configured to assist in the movement of the piston and/or may be connected, for example continuously connected, to a source, e.g. of power, such as fluid, e.g. pressurised fluid, or an electrical power source or any other source of external power.

The assembly may further comprise a piston rod with a first connector or connection means at a first end, e.g. for connecting to the piston, and/or the first end may be connected to or formed integrally with the piston. Additionally or alternatively, the piston rod may comprise a second connector or connection means at a second end, for example opposite the first end, e.g. for connecting to the actuator or to a prime mover of the actuator and/or the second end may be connected to or formed integrally with at least part of the actuator, e.g. a prime mover thereof. Preferably, the piston rod extends through the chamber, for example a wall of the cylinder, which may be an upper wall in use.

.The prime mover of the actuator may comprise an actuator piston, which may comprise a piston head and/or may be reciprocable within an actuator cylinder. The actuator cylinder may comprise an inlet at or adjacent a first of its ends and/or a vent at or adjacent at a second of its ends, for example two or more, e.g. three or more, preferably four peripheral vents or slots. The actuator cylinder may further comprise a cap, for example an anti-splash cap, which may cover and/or surround the vent and/or be mounted over or adjacent thereto and/or is spaced therefrom. Preferably, the actuator piston or piston head is sized and/or dimensioned such that a fluid flow entering the cylinder from the inlet forces the piston from the first end toward the second end. More preferably, the actuator piston or piston head is sized and/or dimensioned such that fluid, e.g. some or a predetermined amount of fluid, is able to flow, e.g. at a predetermined flowrate, between the actuator piston or piston head and the cylinder, for example in the absence of a fluid flow from the inlet. More preferably, the actuator piston or piston head and the actuator cylinder vent are each configured such that the actuator provides a pre-determined actuator force.

The actuator may comprise or be connected or connectable, e.g. in use, to, and/or controlled or controllable, e.g. in use, by a control valve or control valve means or assembly. The control valve or control valve means or assembly may comprise an operating equilibrium valve and/or a pilot or bleed valve and/or a control lever or button or proximity sensor or switch, for example a touchless or soft touch sensor or switch, one or more of which, e.g. each of which, may be operatively connected together. Preferably, the syphon assembly or the control valve or control valve means or assembly comprises a control lever or button or proximity sensor or switch that operates the pilot valve, which in turn may activate or operate or open the operating valve. More preferably, the control lever or button or proximity sensor or switch causes, e.g. on activation thereof, the bleed valve to open, which may release pressure from the operating equilibrium valve, for example a pressure chamber thereof, e.g. thereby opening the operating equilibrium valve. The connection between the pressure chamber and the pilot or bleed valve may be provided by a tube, for example a hydraulic tube.

The operating equilibrium valve may be mounted to or adjacent to or otherwise associated with the syphon assembly or chamber or actuator and/or the pilot or bleed valve and/or a control lever or button or proximity sensor or switch. Alternatively, the operating equilibrium valve may be mounted remotely with respect to the syphon assembly or chamber or actuator and/or the pilot or bleed valve and/or a control lever or button or proximity sensor or switch. In preferred embodiments, the pilot or bleed valve and/or a control lever or button or proximity sensor or switch is mounted or located remotely with respect to the syphon assembly or chamber or actuator, for example on an external and/or exposed surface of a cistern or toilet or water closet furniture or wall with or within which the syphon assembly is associated or comprised or incorporated. In such embodiments, the operating equilibrium valve may be mounted to or adjacent to or otherwise associated with the syphon assembly or chamber or actuator or mounted remotely with respect thereto and/or adjacent to or remotely with respect to the pilot or bleed valve and/or control lever or button or proximity sensor or switch.

Activation or operation or opening of the operating equilibrium valve preferably allows or permits fluid to drive the actuator, for example the prime mover or piston thereof, e.g. to move the piston rod, for example to move the piston within the chamber to initiate a syphonic flushing action. The control lever or button or proximity sensor or switch preferably comprises or is incorporated within an activator or flush activator or push button or an integrated activator or flush activator or push button, which may be configured to provide partial flush and/or dual flush functionality, for example the activator or flush activator or push button may allow either full or partial flush actuation or activation. In some embodiments, a partial flush is initiated by activating or pressing and holding the push button, while a full flush is initiated by activating or pressing and releasing the push button, or vice versa.

In some embodiments, the activator or flush activator comprises a valve means operatively connected or connectable to the operating equilibrium valve, for example a bleed port of the operating equilibrium valve, e.g. for selectively opening and/or closing, or wherein the operating equilibrium valve is configured or adapted to selectively open and/or close, fluid communication between the actuator and the or a source of fluid or pressurised fluid. The activator or flush activator may additionally or alternatively comprise an actuator, e.g. for operating the valve means. In some embodiments, the activator or flush activator comprises an inlet, which may be operatively or fluidly connected or connectable to a bleed port of the operating equilibrium valve, and/or an outlet, which may open to or into, and/or be configured or arranged to feed into, a cistern to which the siphon assembly is incorporate or connected in use.

The control valve assembly may comprise an operating equilibrium valve, e.g. fluidly connected or connectable to the or a syphon assembly, and/or a activator or flush activator, which may comprise an outlet and/or an inlet. The activator or flush activator or the outlet thereof may be operatively connected to the operating equilibrium valve or to a bleed port thereof. The activator or flush activator may be operable to open, in use, fluid communication between the inlet and the outlet, e.g. thereby causing the operating equilibrium valve to open, for example to supply fluid, e.g. under pressure, to the syphon assembly or actuator thereof and/or to drive the syphon assembly or actuator to initiate a syphonic flushing action.

The operating equilibrium valve may be fluidly connected or connectable to a flushing system or assembly. The activator or flush activator may be operable to open, in use, fluid communication between the inlet and the outlet, thereby causing the operating equilibrium valve to open and supply fluid, e.g. under pressure, to the flushing system or assembly to initiate a flushing action.

The valve member may comprise a sealing means, for example an O-ring seal that may be received or receivable within a circumferential groove thereof, at one or each of its ends, for example wherein the or one of the sealing means is moved out of engagement with a passageway within which the valve member is at least partially received, e.g. when moved from the first position to the second position. The activator or flush activator may comprise a biasing means, for example a resilient biasing means such as a spring which may comprise compression spring, for or configured to bias the valve member toward the first position. The actuator may comprise a push button and/or may be connected or fixed to or with respect to, e.g. threadedly connected or engaged to, the valve member.

The assembly may comprise a partial flush means. The partial flush means may comprise a passage opening the syphon chamber to the interior of the cistern in use, which passage may be open when the piston is in an actuated or raised position or condition and/or closed when the piston is in a rest or lowermost position or condition or vice versa. The chamber may comprise the passage, which may at least partially surround the piston rod and/or may be closed by a sealing means or seal associated with the piston rod, for example as described in GB2329398. The sealing means may be biased to or toward a closed position or condition, for example in which the passage is closed. The assembly may be configured such that the sealing means is moved from the closed position or condition to an open position or condition only when the piston is at or adjacent a fully raised or uppermost position, e.g. such that a maximum volume flush can be effected by raising the piston and allowing it to drop to an intermediate position, for example below its fully raised or uppermost position, without delay, but a lesser volume flush can only be effected by holding the piston in a substantially fully raised or uppermost position until the water level drops below the passage opening allowing air to enter the chamber and interrupting the syphonic action

The sealing means may comprise a seal, e.g. a sealing washer, which may be biased or resiliently biased, for example by a biasing means or resiliently biasing means such as a spring which may be a compression spring. The sealing means may be biased or resiliently biased toward or against the chamber or passage or toward a closed or sealing position or condition. The passage may comprise an annular passage or vent, which may be interrupted. The or a piston rod or a lower portion thereof or the syphon piston may comprise an abutment surface or element or member, which may be configured to abut and/or unseat or move the sealing means, e.g. from the closed position or condition to the open position or condition. The sealing means may include an abutment surface or element or member that may be connected or mounted or fixed to the seal or sealing washer or formed integrally therewith.

Additionally or alternatively, the piston rod may comprise the passage. Additionally or alternatively, the passage may be defined between the piston rod and the opening through which the piston rod passes, for example by an undersized portion of the rod along part of its length or one or more depressions on an outer surface of the piston rod or through its centre.

The piston or syphon piston may comprise a plate or plate member or flat member and/or may incorporate one or more apertures or holes or openings, and/or a diaphragm, for example a flexible diaphragm that may be formed of a flexible, e.g. elastic and/or plastics, material, which may be a sheet material. The diaphragm may coextend and/or may be secured, e.g. at its centre, to the plate or plate member or flat member, for example to on one of the major sides thereof. The assembly may further comprise a biaser or biasing means for biasing the piston or plate or plate member or flat member toward the open end of the chamber. The biasing means may comprise a weight that may be mounted, e.g. releasably or movably mounted, to the piston or plate or plate member or flat member. Additionally or alternatively, the biasing means may comprise a resilient biasing means, such as a spring, e.g. a compression spring, that may, for example, provide an urging force.

The actuator may be connected to the operating valve by a hose, for example a flexible hose. The connection between the actuator and the operating valve is preferably at the inlet of the actuator. The inlet of the actuator may be at or in a lower portion of the actuator and/or below the actuator piston or piston head in use, e.g. so that when water enters the cylinder portion it is forced upwards along with the piston in order to initiate a flush.

In use, operation of the control lever or button or proximity sensor or switch may activate the pilot or bleed valve or cause it to open, which may cause water to bleed from the pressure chamber of the operating equilibrium valve, e.g. through the tube and into the cistern. A subsequent reduction in the pressure in the operating equilibrium valve, e.g. in the internal pressure chamber thereof, may result in the operating equilibrium valve opening, for example allowing water to flow into the piston chamber, driving the piston and plate member up to start the syphonic effect. Removal of the activation of, or force on, the control lever or button or proximity sensor or switch may cause the operating equilibrium valve to close and/or the biasing means to cause the plate or plate member or flat member to return to a pre-flush position or condition. As the piston returns to its pre-flush position or condition, water in the piston cylinder may bleed out around the actuator piston or piston head.

The syphon assembly may comprise an adjustment means for adjusting the configuration of the syphon in the manner described in GB2486776. The syphon may further comprise an adaptable full flush volume feature, which may be similar to the arrangement disclosed in GB2338723. Alternatively, the syphon may comprise an adaptable full flush volume feature that is adjustable with the syphon in situ. For example the syphon assembly may comprise a closure element for selectively changing the full flush volume or the level at which syphonic action is interrupted, which closure element may be removable when the syphon assembly is mounted, in use, within a cistern.

The closure element may be received, for example slidingly or slidably received, within a slot or guide in or on or associated with the chamber or the side wall thereof. Preferably, the closure element is slidable along, e.g. vertically along, the chamber or side wall such that it may be removed from above. The closure element may comprise a stop or stop element, such as a flange, which may be comprised or incorporated in or mounted on an upper portion of the closure element, for example which flange may abut, e.g. in use, a portion or surface, e.g. an upper portion or surface, of the slot or guide or chamber or side wall. The closure element may additionally or alternatively comprise one or more, e.g. two or more, preferably three or more, such as four or five or more, openings or apertures or holes each of which may correspond to or define a different full flush volume or water level at which syphonic action is or would be interrupted. One or more or each of the openings or apertures or holes may comprise a closure or plug that may be received, e.g. removably received, therein and/or secured thereto or with respect thereto, for example to close the opening or aperture or hole.

The syphon assembly or chamber may comprise one or more, preferably two or more, such as three or four or five or more, e.g. a plurality of, ribs, which may be horizontal. The slot or guide may be at least partially provided by or incorporated within the or at least one of the or each of the ribs. The or at least one of the or each of the ribs may extend horizontally and/or include a cutout that at least partially defines the slot or guide. The or each cutout may include an enlarged portion, e.g. central portion, for example to permit the closure or plug or closures or plugs of the closure element to pass therethrough.

The syphon assembly may be constructed from any suitable material or combination of materials. Preferably, the toilet flushing means is constructed from a corrosion-resistant material, for example a plastics material, or a corrosion resistant metal such as copper.

A further aspect of the invention provide a cistern comprising a fill valve assembly described above received therein.

The cistern may comprise a control valve assembly for operating or controlling a flushing system, the control valve assembly comprising an operating valve fluidly connected or connectable to a flushing system and a flush activator with an inlet and an outlet operatively connected to the operating valve, wherein the flush activator is operable to open, in use, fluid communication between the inlet and the outlet, thereby causing the operating valve to open and supply fluid to the flushing system to initiate a flushing action.

The flush activator may further comprise a control lever or button or proximity sensor or switch for operating the control valve assembly.

A yet further aspect of the invention provides a toilet comprising a cistern as described above.

For the avoidance of doubt, any of the features described herein apply equally to any aspect of the invention.

Embodiments of the invention will now be described by way of example only with reference to the accompanying drawings in which:
Figure 1 is a partially segmented perspective view of a syphon assembly for use with a fill valve assembly according to the present invention;
Figure 2 is a cross sectional side view of the syphon assembly of Figure 1;
Figure 3 is a perspective view of the flush activator for use with the syphon assembly of Figures 1 and 2;
Figure 4 is an exploded view of the flush activator of Figure 3;
Figure 5 is a cross-sectional view of the flush activator of Figures 3 and 4 shown in an unactuated condition;
Figure 6 is a view similar to that of Figure 5 with the flush activator shown in an actuated condition;

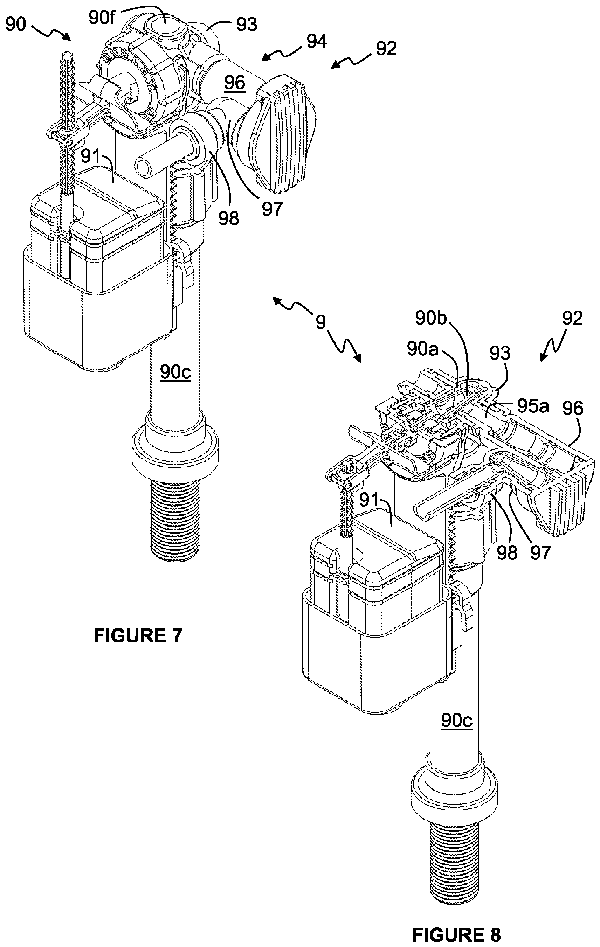

Figure 7 is a perspective view of a bottom entry fill valve assembly according to an embodiment of the invention, which incorporates a branch element for use with the syphon assembly of Figures 1 and 2;
Figure 8 is a perspective view of the fill valve assembly of Figure 7 sectioned through the fill valve and branch element;
Figure 9 is a partially exploded view of the fill valve assembly of Figures 7 and 8;
Figure 10 is a perspective view of a side entry fill valve assembly according to an embodiment of the invention with a branch element in a first orientation for use with the syphon assembly of Figures 1 and 2;
Figure 11 is a perspective view of the fill valve assembly of Figure 10 with the branch element in a second orientation;
Figure 12 is a perspective view of the fill valve assembly of Figure 10 sectioned through the fill valve and branch element;
Figure 13 is a partially exploded view of the fill valve assembly of Figure 10;
Figure 14 is a partially segmented perspective view of a further syphon assembly;
Figure 15 is a section view of the actuation system of the syphon assembly of Figure 14 illustrating the flush activator operatively connected to the operating equilibrium valve and showing the flow of mains water into the operating equilibrium valve;
Figure 16 is a partial perspective view of the partial flush closure element of the syphon assembly of Figure 14 shown in an open position;
Figure 17 is a view similar to that of Figure 16 but showing the partial flush closure element in a closed position; and
Figures 18, 19 and 20 are partial perspective views of the adaptable flush volume feature of the syphon assembly of Figure 14 shown with the closure element installed, partially removed and fully removed positions respectively.

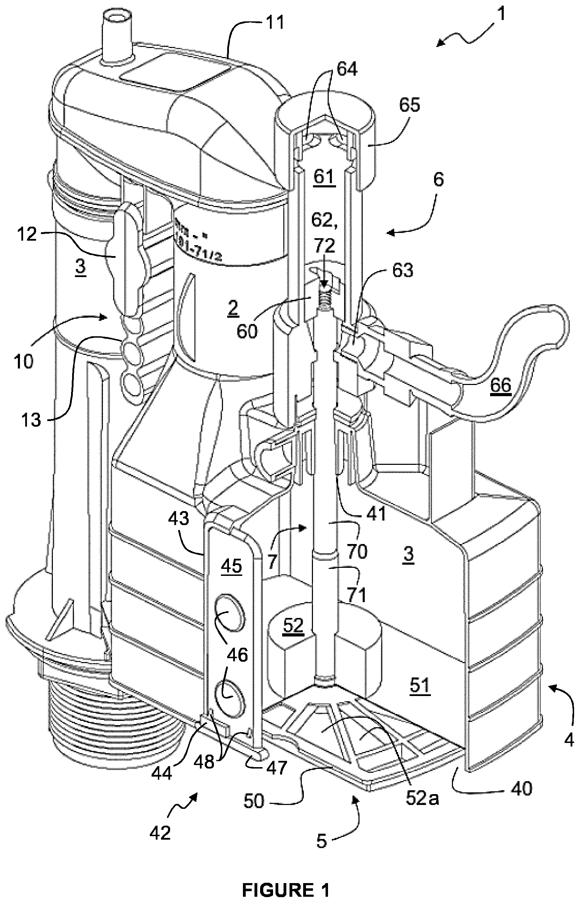

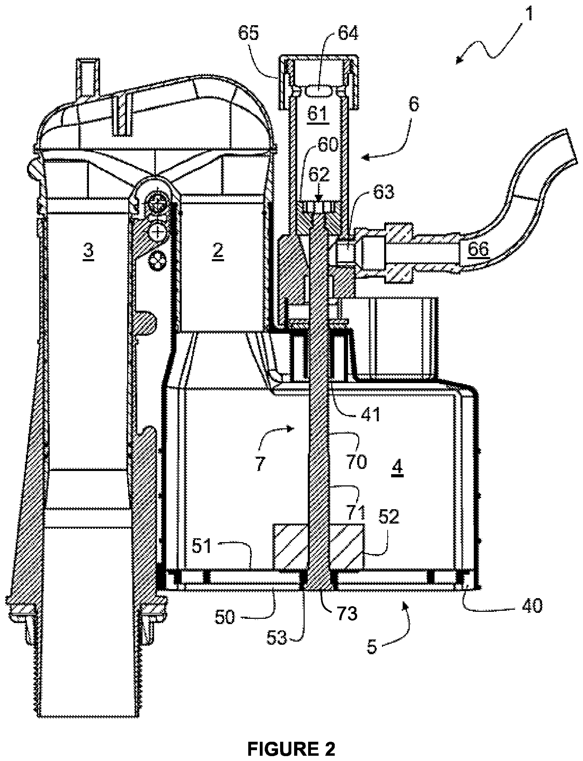

Referring to Figures 1 and 2 there is shown a syphon assembly 1 for discharging water from a cistern (not shown). The syphon assembly 1 includes an adjustment means 10 for adjusting the configuration of the syphon. The syphon assembly 1 includes an inverted generally U shaped duct 11 fluidly and telescopically connected to an upleg 2 and a downleg 3, an enlarged rectangular chamber 4 integral with the upleg 2 and having an open lower end 40, a piston 5 movable in the chamber 4 and a hydraulic actuator 6 connected to the piston 5 by a piston rod 7 that extends through a hole 41 in an upper wall of the chamber 4. The downleg 3 is connected, in use, to the flush pipe of a cistern (not shown) to feed flush water into a toilet pan (not shown). The hydraulic actuator 6 is operable to move the piston 5 within the chamber 4 to initiate a syphonic flushing action in use.

The adjustment means 10 is provided by a releasable fastener 12 that secures the U shaped duct 11, the upleg 2 and the downleg 3 together by engaging simultaneously a respective chain of lugs 13 in the manner described in GB2486776.

The chamber 4 includes an adaptable flush volume feature 42 similar to the arrangement disclosed in GB2338723. More specifically, one of the wider, side walls of the chamber 4 is provided with a vertically extending venting aperture in the form of a generally rectangular slot 43 closed at its upper end, open at its lower end and having a raised bridging portion 44 across the lower end. The slot 43 also includes an edge profile that slidably receives and releasably and sealingly engages a correspondingly shaped closure element 45. The closure element 45 includes two removable plugs 46 for varying the flush volume, a lower flange 47 and a pair of locking lugs 48. The closure element 45 is inserted into and/or removed from the slot 43 through the open lower end and is secured in place by captivating the bridging portion 44 of the chamber 4 between the flange 47 and locking lugs 48.

The piston 5 includes a plate 50 with a coextensive diaphragm 51 and a weight 52 each of which is secured at its centre to the centre of the upper major surface of the plate 50. The plate 50 is formed of a rigid or semi-rigid plastics material and incorporates a plurality of apertures 52a through its thickness and a central engaging hole 53 with a counterbore on the opposite side of the piston 5 to the diaphragm 51 and weight 52. The diaphragm 51 is formed of a sheet of flexible plastics material such that a flow of water from beneath the piston 5 through the apertures 52a causes the diaphragm 51 to raise and allow water to flow, but prevents flow in the opposite direction, thereby operating as a one-way valve.

The actuator 6 includes an actuator piston 60 reciprocable within an actuator cylinder 61. The actuator piston 60 includes a threaded hole 62 for securement with an upper end of the piston rod 7 and the piston rod 7 extends through a first end of the actuator cylinder 61. The actuator cylinder 61 includes a radial inlet 63 adjacent its first end and four peripheral vents or slots 64 adjacent a second end thereof. The actuator cylinder 61 also includes an anti-splash cap 65, which covers the second end and surrounds the peripheral vents or slots 64, but is spaced therefrom to provide a gap for water and/or air to pass. The inlet 63 is connected to an operating equilibrium valve (not shown) by a flexible hose 66.

The actuator piston 60 is sized and dimensioned such that a fluid flow entering the actuator cylinder 61 from the inlet 63 forces the actuator piston 60 from the first end of the actuator cylinder 61 toward the second end thereof. The actuator piston 60 is also sized and dimensioned such that the clearance between the actuator piston 60 and the cylinder 61 permits some fluid to flow therebetween. The piston 60 is formed of a plastics material having a relatively low weight.

The piston rod 7 is substantially cylindrical in shape with an undersized first, upper portion 70 and a second, lower portion 71. The first portion 70 is sized and dimensioned to provide clearance between the hole 41 in the chamber 4 to allow air to pass therebetween, while the second portion 71 is sized and dimensioned to prevent the passage of air when received within the hole 41. The piston rod 7 also includes a threaded end 72 at the end of the first portion 70 and an engaging head 73 at the end of the second portion 71. The threaded end 72 is received within and engages the threaded hole 62 of the actuator piston 60 to secure the piston rod 7 to the actuator piston 60. The engaging head 73 is an enlarged portion that is received within the correspondingly shaped engaging hole 53 of the piston plate 50.

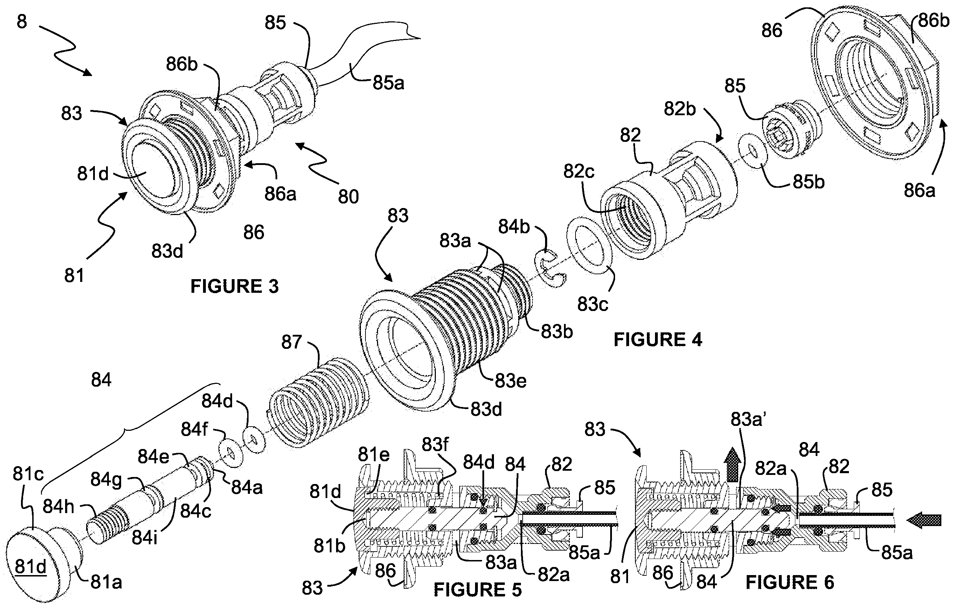

The supply of mains water is controlled by a control assembly that includes the operating equilibrium valve (not shown), which is fluidly connected to a flush activator 8 that incorporates a bleed valve 80 operated by an integral a pushbutton 81 (shown in Figures 3 to 5). The bleed valve 80 includes an inlet housing 82, an outlet housing 83 and a valve member 84. The flush activator 8 also includes a push fit fitting 85 for securely receiving a tube 85a, a compression spring 87 and a circular mounting flange 86 with an internally threaded hollow body 86a with a hexagonal circumference 86b.

The pushbutton 81 includes a body 81a with an internally threaded blind hole 81b extending from a first end thereof and an enlarged head 81c at a second end thereof. The head 81c includes a convex actuation surface 81d on a first side thereof and an annular recess 81e on a second side thereof.

The inlet housing 82 is hollow and substantially cylindrical with a longitudinal bore that narrows at its centre to provide an inlet port 82a. The push fit fitting 85 is securedly received within a first end 82b of the inlet housing 82 by an interference fit with an O-ring seal 85b captivated between the push fit fitting 85 and an adjacent internal surface of the inlet housing 82. The inlet housing 82 also includes an internally threaded second end 82c.

The outlet housing 83 is also hollow and substantially cylindrical with four radial outlets 83a fluidly connected to and extending from a longitudinal bore 83a', which receives and guides the valve member 84. The outlet housing 83 includes an undersized, externally threaded first end 83b for threaded engagement with the second end 82c of the inlet housing 82 and an O-ring seal 83c received within a circumferential groove to provide a sealing engagement therebetween. The outlet housing 83 also includes a flange 83d at a second end thereof and an external thread 83e between the outlets 83a and the flange 83d for engagement with the mounting flange 86 in order to captivate a wall portion (not shown) of a cistern (not shown) or water closet furniture (not shown) therebetween in the normal way.

The valve member 84 includes a first, tapered end 84a, a snap ring 84b received within a first circumferential groove 84c adjacent the first end 84a, a first O-ring seal 84d received within a second circumferential groove 84e, a second O-ring seal 84f received within a third circumferential groove 84g and a second, externally threaded end 84h for engagement with the blind hole 81d of the pushbutton 81. The valve member 84 also includes a circumferential undercut 84i between the O-ring seals 84d, 84f.

As shown more clearly in Figure 5, the compression spring 87 is located around the valve member 84 and pushbutton body 81a with one of its ends received within the annular 81e of the pushbutton 81. The compression spring 87 is captivated between the pushbutton head 81c and an internal annular recess 83f of the outlet housing 83 and biases the valve member 84 toward a closed position in which the snap ring 84b abuts the first end 83b of the outlet housing 83. With the valve member 84 in the closed position, the first O-ring seal 84d seals against the bore 83a' of the outlet housing 83 to close fluid communication between the inlet port 82a and the outlets 83a.

Depression of the pushbutton 81 moves the valve member 84 from the position illustrated in in Figure 5 to that shown in Figure 6, which moves the O-ring seal 84d out of engagement with the bore 83a', thereby allowing pressurised water from the bleed port of the operating equilibrium valve (not shown) to exit through the outlets 83a via the undercut 84i. This releases pressure from a pressure chamber of the operating equilibrium valve (not shown), thereby opening the operating equilibrium valve (not shown).

The operating equilibrium valve (now shown) is mounted remotely from the syphon assembly 1 and is fluidly connected to a domestic mains water system (not shown) via a fill valve assembly 9, 109 according to the invention to selectively provide a flow of water at mains pressure to the actuator cylinder 61 through the inlet 63. The use of a bottom entry fill valve assembly 9 or a side entry fill valve assembly 109 depends upon the cistern (not shown) into which the syphon assembly 1 is incorporated in use.

As shown in 7 to 9, the bottom entry fill valve assembly 9 includes a float controlled diaphragm equilibrium valve 90 of the kind described in GB2332731, in which water pressure on opposite sides of the diaphragm is kept substantially in equilibrium so that when a lever mounted float 91 drops, a bleed aperture is exposed and unseats the diaphragm by a small change in pressure differential. In accordance with the invention, the fill valve assembly 9 according to this embodiment differs from the aforementioned design in that there is provided a branch element 92 that cooperates with the float operated valve 90 to feed the actuator 6 of the syphon assembly 1. Specifically, the filter chamber 90a that houses the conical inlet filter 90b of the float operated valve 90, which is fed by the vertical feed pipe 90c, includes a pair of side openings 90d, 90e in addition to the upper outlet 90f extending horizontally from the filter chamber 90a, wherein the branch element 92 is receivable in either one of the openings 90d, 90e and secured to the float operated valve 90 by a clamp element 93.

The branch element 92 in this embodiment includes a twin barrel housing 94 with an open end 94a, a first side that includes an undersized inlet spigot 95 opposite the open end 94a and feeding into an inlet chamber 96 and a second side that includes a filter chamber 97 feeding into a radial outlet 98 extending perpendicularly from the filter chamber 97. The inlet spigot 95 includes an inlet passage 95a that feeds into the inlet chamber 96, which is open at the open end 94a of the housing 94. The filter chamber 97 is also open at the open end 94a of the housing 94. The branch element further includes a closure element 99 for closing the open end 94a of the housing 94, which has a facing internal surface shaped to provide fluid communication between the open ends of the inlet chamber 96 and the filter chamber 97.

The inlet spigot 95 includes an outer circumferential groove 95b that receives an O-ring seal 95c and an external circumferential securing flange 95d. The inlet chamber 96 receives a pair of non-return valves 96a, 96b to prevent backflow and having respective O-ring seals, the non-return valves 96a, 96b being separated by a spacer 96c received and captivated therebetween to enable independent operation. The filter chamber 97 extends parallel with respect to the inlet chamber 96 and is also open at the same end of the housing 94, but it includes a hemispherical base 97a and feeds into the outlet 98 radially. The filter chamber 97 houses a conical inlet filter 97b. The outlet 98 is hollow and substantially cylindrical in shape with two steps, providing three internal diameters, wherein a push fit fitting 98a is received within the largest diameter, free end of the outlet portion 98 and abuts one of the steps, while an O-ring seal 98b is received within the intermediate diameter and abuts a second of the steps for sealing with a tube 98c that is received within the smallest diameter and feeds the inlet of the operating equilibrium valve (not shown).

The closure element 99 includes a pair of inwardly extending flanges 99a that cooperate with a pair of opposed external flanges 94b projecting outwardly from the open end 94a of the housing 94 to secure the closure element 99 to the housing 94 and to seal the open end 94a thereof. The closure element 99 also includes an O-ring seal 99b received within a circumferential groove of a spigot portion 99c thereof, which O-ring seal 99b sealingly cooperates with an internal surface of the second end of the housing 94.

The clamp element 93 is shaped to match the contours of the portion of the float operated alve 90 that houses the valve filter chamber 90a, but also includes inwardly extending radial flanges 93a adjacent the openings 90d, 90e for cooperation with the securing flange 95d of the inlet spigot 95. Each radial flange 93a extends inwardly from a respective hollow, part cylindrical portion 93b of the clamp element 93, circumscribes more than 180° to provide a C-shaped receptacle and includes a lead-in to facilitate insertion. In use, one of the C-shaped receptacles receives by a snap fit the portion of the inlet spigot 95 between the securing flange 95d and the outer surface of the inlet chamber 96 of the housing 94 such that the flange 93a is captivated therebetween.

The branch element 92 in this embodiment is reversible in that it may be inserted into either of the valve openings 90d, 90e depending upon the space constraints within the cistern (not shown). The fill valve assembly 9 also includes a plug 93c for closing off the unused opening 90d, 90e, which cooperates with the other of the C-shaped receptacles of the clamp element 93. The plug 93c includes similar features to the spigot portion 95, namely an outer circumferential groove 93d that receives an O-ring seal 93e, an external circumferential securing flange 93f and an oversized head 93g between which flange 93f and head 93g is received the other flange 93a of the clamp element 93 to seal off the other of the valve openings 90d, 90e.

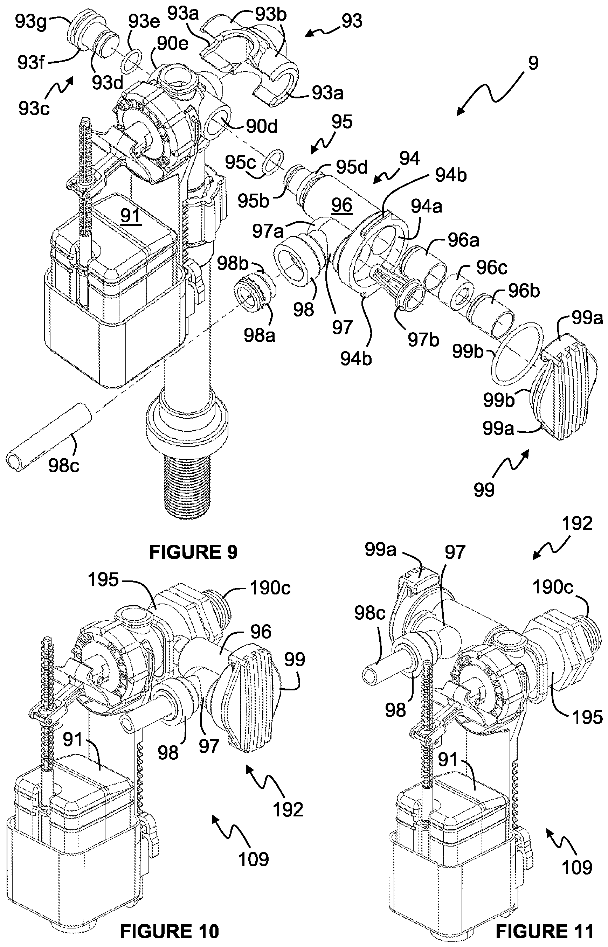

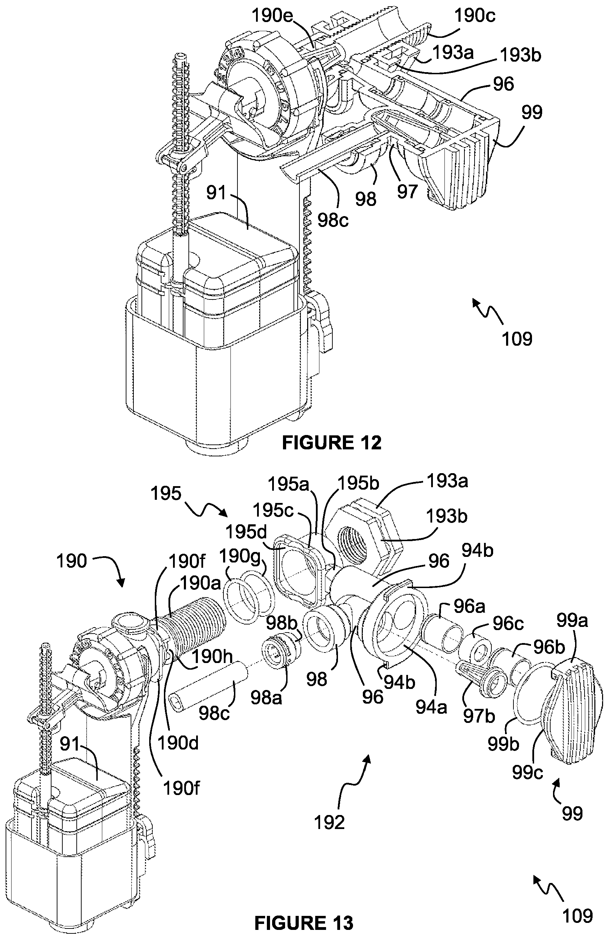

Turning now to Figures 10 to 13, the side entry fill valve assembly 109 is similar to the bottom entry fill valve assembly 9, wherein like references depict like features that will not be described further. The side entry fill valve assembly 109 differs from the bottom entry fill valve assembly 9 in that the vertical feed pipe 90c is replaced with a threaded extension 190c of the filter chamber housing 190a, the side openings 190d, 190e thereof are recessed within the float operated valve 190 and are in fluid communication with one another via an annular recess 190f and the inlet spigot 95 is replaced with an annular inlet member 195 of the branch element 192. The float operated valve 190 also includes a pair of O-rings 190g each received within a respective groove 190h on either side of the annular recess 190f.

The annular inlet member 195 includes a cylindrical body 195a with a radial passageway 195b that feeds into the inlet chamber 96 and a square flange 195c with a square shaped recess 195d for receiving a correspondingly shaped locating flange 190f of the float operated valve 190. The side entry fill valve assembly 109 also includes a pair of locking nuts 193a, 193b for securing the annular inlet member 195 to the float operated valve 190 such that it is aligned with the side openings 190d, 190e. The branch element 192 in this embodiment is also reversible by rotating it through 180 degrees prior to locating the flange 190f of the valve 190a into the recess 195d of the branch element 195 and securing them together with the locking nuts 193a, 193b.

In use, when a user depresses the pushbutton 81, the operating equilibrium valve (not shown) opens, fluid flows into the cylinder 61 through the inlet 63, driving the actuator piston 60 upward, pulling the piston rod 7 to drive the piston 5 upward within the chamber 4 to initiate a syphonic flushing action. A full flush may be initiated by pressing and holding the push button 81 so that the operating equilibrium valve (not shown) stays open, thereby ensuring that the second, lower portion 71 of the piston rod 7 closes the hole 41 in the chamber 4. The flushing action continues until the water level reaches the base of the chamber 4, at which point the syphonic effect is broken and the cistern (not shown) refills in the known manner by the float operated fill valve 9, 109. A partial flush may be initiated by pressing and releasing the push button 81 so that the operating equilibrium valve (not shown) closes after the flush is initiated, with the weight 52 forcing the piston 5 downward such that the first portion 70 of the piston rod 50 fits loosely within the hole 41 of the chamber 4, thereby providing a vertical passage therebetween to break the siphonic action when the water level drops below the hole 41. Clearly, the reverse of the partial flush arrangement described above is also envisaged. This may be achieved, for example, by configuring the syphon assembly 1 as described in GB2329398.

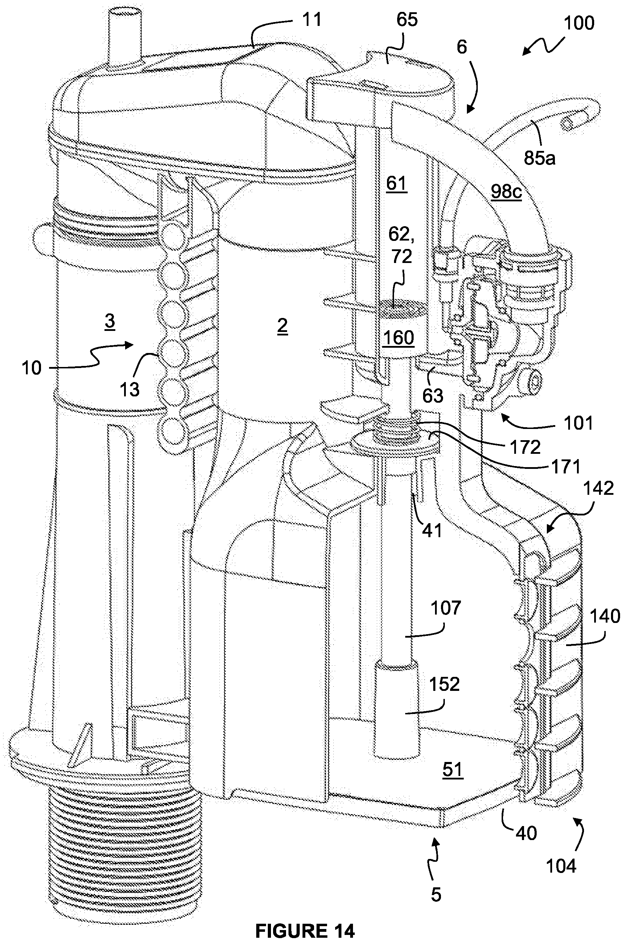

Turning now to Figure 14, there is shown a further syphon assembly 100, which is similar to the syphon assembly 1 described above, wherein like references depict like features that will not be described further. This, further syphon assembly 100 differs from the syphon assembly 1 described above in that an operating equilibrium valve 101 is mounted directly to the hydraulic actuator 6, the means by which a partial flush is achieved has been reconfigured, the weight 52 is incorporated within the actuator piston 160 and piston rod 107 and the adaptable flush volume feature 142 has been reconfigured for improved access and strength.

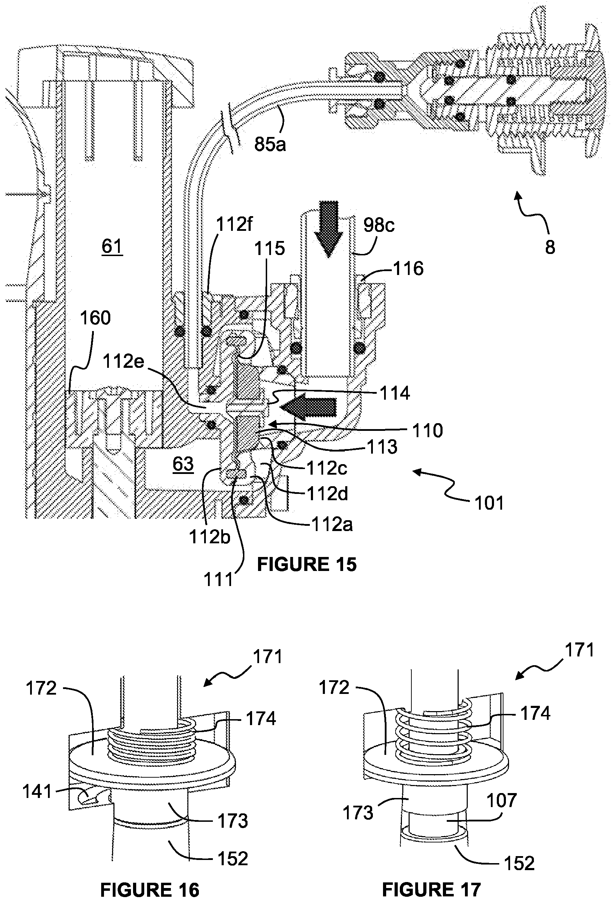

The operating equilibrium valve 101 of this syphon assembly 100 functions in a manner that is similar in principle to the float operated diaphragm equilibrium valves 90, 190 of the fill valve assemblies 9, 109 described above. Specifically, the operating equilibrium valve 101 includes a diaphragm 110 with a peripheral flange 111 captivated between opposed housing portions 112a, 112b, a central valve portion 113 with a central hole incorporating a flow regulation pin 114 and a flexible bridging portion 115 joining the peripheral flange 111 to the valve portion 113. As shown in Figures 14 and 15, the downstream side of the diaphragm 110 has a larger surface area exposed to fluid pressure than the upstream side thereof. The upstream housing portion 112a includes a valve seat 112c and a plurality of radial outlets 112d fluidly connected to the inlet 63 of the actuator 6. The downstream housing portion 112b includes a central outlet 112e that feeds the tube 85a connected to the flush activator 8 at one end and to a push fit fitting 112f mounted to the actuator 6 at the other end. The mains water inlet tube 98c is connected to the operating equilibrium valve 101 by a push fit fitting 116.

In use and with the activator 8 in the position shown in Figures 5 and 15, water pressure on opposite sides of the diaphragm 110 is kept substantially in equilibrium, which causes the valve portion 113 of the diaphragm 110 to be biased against the valve seat 112c on the upstream housing portion 112a. When the pushbutton 81 of the activator 8 is depressed, the passage between the outlet 112e of the downstream housing portion 112b and the radial outlets 83a of the activator 8 is open, which reduces the pressure on the downstream side of the diaphragm 110, owing to the restricted flow of pressurised water passed the flow regulation pin 114. This, in turn, unseats the diaphragm 110 and opens fluid flow between the mains water inlet tube 98c and the radial outlets 112d of the operating equilibrium valve 101 and drives the piston 160 to raise the piston rod 107 in order to initiate the flush.

The piston rod 107 has a constant diameter and is received within a spigot 152 connected to the syphon piston 5. An interrupted annular vent 141 surrounds the hole 41, which vent 141 provides a vertical passageway joining the interior of the chamber 104 of the syphon assembly 100 to the inside of the cistern (not shown). The syphon assembly 100 includes a sealing element 171 in the form of a washer 172 with a hollow, cylindrical portion 173 depending therefrom and compression spring 174 all surrounding the piston rod 107. The washer 172 and spring 174 are captivated between the base of the actuator cylinder 61 and the top of the vent 141 such that the spring 174 urges the washer 172 against the top of the chamber 104 to seal the vent 141.

In use, when the piston rod 107 is raised to its uppermost position, the spigot 152 urges the cylindrical portion 173, raising sealing washer 172 against the bias of the spring 174, thereby exposing the vent 141. If the pushbutton 81 is held in a depressed position as shown in Figure 6, the flush continues until the water level reaches the vent 141, at which point the syphonic action is interrupted to provide a partial flush. If the pushbutton 81 is depressed and released, the syphon piston 5 drops as the water in the actuator cylinder 61 flows around the piston 160 and the sealing washer 172 is urged against the vent 141 under the influence of the biasing spring 174. The use of a compression spring 174 is particularly advantageous because it ensures that the vent 141 is sealed before the water level drops to the level of the vent 141, which could inadvertently result in a partial flush where a full flush is requested. The piston 160 and rod 107 are both formed of a heavier material than that in the syphon assembly 1 described above, for example a brass material, in order to obviate the need for a separate weight 52 as in the syphon assembly 1 described above.

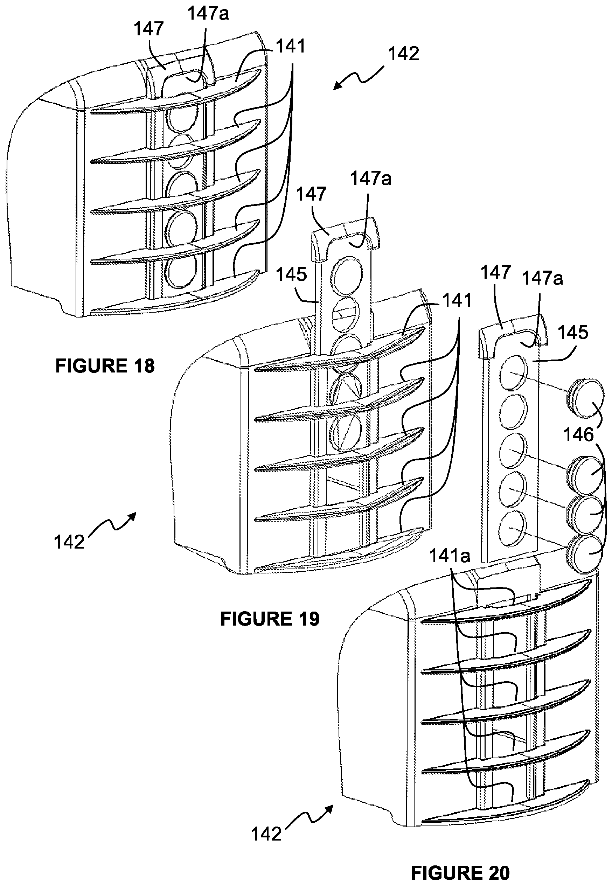

The adaptable flush volume feature 142 is incorporated with the outer, short side 140 of the chamber 104, as shown more clearly in Figures 19 and 20. The chamber 104 includes a plurality of horizontal reinforcing ribs 141 spaced vertically along its height. The chamber 104 includes an elongate opening 143 extending vertically with an open bottom and a closed top similar to the slot 43 of the syphon 1 described above. However, engagement between the opening 143 and the closure element 145 is provided by respective cutouts 141a in each reinforcing rib 141 extending through its thickness on the side thereof adjacent the opening 143, thereby providing an interrupted vertical slot that is open at its upper end.

Each cutout 141a is substantially rectangular with an enlarged central portion to permit the removable plugs 146 of the closure element to pass therethrough. There is provision for up to five removable plugs 146 only four of which are shown. The closure element 145 includes an upper flange 147 with a curved recess 147a, wherein the outer portions of the flange 147 abut the region of the uppermost reinforcing rib 141 surrounding the cutout 141a when the closure element 145 is received therein in order to hold it in place. Thus, the closure element 145 can be removed from above by simply placing a finger within the recess 147a and lifting the closure element 145, which is particularly advantageous as this can be done with the syphon 100 located in situ within the cistern (not shown).

It will be appreciated by those skilled in the art that several variations are envisaged without departing from the scope of the invention, which is defined by the claims.

## Claims

1. A fill valve assembly (9, 109) for inclusion into a cistern flushing system, the assembly comprising a float operated equilibrium valve (90, 190) for refilling the cistern and a branch element (92, 192) fluidly connected upstream the float operated equilibrium valve (90, 190), wherein the branch element (92, 192) includes an outlet (98) for providing, in use, fluid flow to a hydraulic actuator (6) of the cistern flushing system.

2. Assembly according to any preceding claim, wherein the branch element (92, 192) comprises a non-return valve (96a, 96b) to prevent backflow.

3. Assembly according to any preceding claim, wherein the branch element (92, 192) comprises a flow restrictor.

4. Assembly according to any preceding claim, wherein the branch element (92, 192) comprises a filter.

5. Assembly according to any preceding claim, wherein the branch element (92, 192) comprises a push fit fitting.

6. Assembly according to any preceding claim, wherein the branch element (92, 192) is connectable in one of two or more orientations.

7. Assembly according to any preceding claim, wherein the branch element (92, 192) is integral with the float operated equilibrium valve (90, 190).

8. Assembly according to claim 6 or claim 7 comprising two or more upstream outlets (90d, 90e, 190d, 190e), each of which is at a different position and/or orientation on or in the assembly, wherein the branch element (92, 192) is selectively connectable in one of a first orientation, in which the branch element (92, 192) is aligned at least partially with a first of the upstream outlets (90d, 90e, 190d, 190e), and a second orientation, in which the branch element (92, 192) is aligned at least partially with a second of the upstream outlets (90d, 90e, 190d, 190e).

9. Assembly according any one of claims 6 to 8 comprising two upstream outlets (90d, 90e, 190d, 190e) on opposed portions or sides of the assembly such that the branch element (92, 192) may be connected to the assembly at one of its sides.

10. Assembly according to any preceding claim further comprising a clamp element (93) for securing the branch element (92, 192) to the fill valve assembly.

11. Assembly according to any preceding claim comprising a float (91) pivotally mounted with respect to the equilibrium valve (90, 190) via a lever that selectively closes a bleed port of the equilibrium valve to selectively open or close the equilibrium valve (90, 190).

12. A cistern comprising an assembly according to any preceding claim received therein.

13. A cistern according to claim 12 further comprising a control valve assembly for operating or controlling a flushing system, the control valve assembly comprising an operating valve (101) fluidly connected or connectable to a flushing system and a flush activator (8) with an inlet and an outlet operatively connected to the operating valve (101), wherein the flush activator is operable to open, in use, fluid communication between the inlet and the outlet, thereby causing the operating valve (101) to open and supply fluid to the flushing system to initiate a flushing action.

14. Cistern according to claim 13, wherein the flush activator (8) comprises a control lever or button or proximity sensor or switch.

15. A toilet comprising a cistern according to any one of claims 12 to 14.

## Patentansprüche

1. Füllventilanordnung (9, 109) zum Einschluss in ein Spülkastenspülsystem, wobei die Anordnung ein schwimmerbetätigtes Gleichgewichtsventil (90, 190) zum erneuten Auffüllen des Spülkastens und ein Rohrabzweigungselement (92, 192) umfasst, das dem schwimmerbetätigten Gleichgewichtsventil (90, 190) fluidisch vorgeschaltet ist, wobei das Abzweigungselement (92, 192) einen Auslass (98) zum Bereitstellen eines Fluidflusses zu einem hydraulischen Stellglied (6) des Spülkastenspülsystems in Verwendung beinhaltet.

2. Anordnung nach einem der vorhergehenden Ansprüche, wobei das Abzweigungselement (92, 192) ein Rückschlagventil (96a, 96b) umfasst, um einen Rückfluss zu verhindern.

3. Anordnung nach einem der vorhergehenden Ansprüche, wobei das Abzweigungselement (92, 192) einen Durchflussbegrenzer umfasst.

4. Anordnung nach einem der vorhergehenden Ansprüche, wobei das Abzweigungselement (92, 192) ein Filter umfasst.

5. Anordnung nach einem der vorhergehenden Ansprüche, wobei das Abzweigungselement (92, 192) ein Steckanschlussteil umfasst.

6. Anordnung nach einem der vorhergehenden Ansprüche, wobei das Abzweigungselement (92, 192) in einer von zwei oder mehr Ausrichtungen verbunden werden kann.

7. Anordnung nach einem der vorhergehenden Ansprüche,wobei das Abzweigungselement (92, 192) einstückig mit dem schwimmerbetätigten Gleichgewichtsventil (90, 190) ist.

8. Anordnung nach Anspruch 6 oder 7, die zwei oder mehr vorgelagerte Auslässe (90d, 90e, 190d, 190e) umfasst, von denen sich jeder an einer anderen Position und/oder Ausrichtung auf oder in der Anordnung befindet, wobei das Abzweigungselement (92, 192) wahlweise in einer ersten Ausrichtung, in der das Abzweigungselement (92, 192) wenigstens teilweise an einem ersten der vorgelagerten Auslässe (90d, 90e, 190d, 190e) ausgerichtet ist, und in einer zweiten Ausrichtung verbunden werden kann, in der das Abzweigungselement (92, 192) wenigstens teilweise an einem zweiten der vorgelagerten Auslässe (90d, 90e, 190d, 190e) ausgerichtet ist.

9. Anordnung nach einem der Ansprüche 6 bis 8, die zwei vorgelagerte Auslässe (90d, 90e, 190d, 190e) an gegenüberliegenden Abschnitten oder Seiten der Anordnung derart umfasst, dass das Abzweigungselement (92, 192) an einer seiner Seiten mit der Anordnung verbunden werden kann.

10. Anordnung nach einem der vorhergehenden Ansprüche, die ferner ein Klemmelement (93) zum Befestigen des Abzweigungselements (92, 192) an der Füllventilanordnung umfasst.

11. Anordnung nach einem der vorhergehenden Ansprüche, die einen Schwimmer (91) umfasst, der in Bezug auf das Gleichgewichtsventil (90, 190) über einen Hebel schwenkbar gelagert ist, der wahlweise einen Entlüftungsanschluss des Gleichgewichtsventils schließt, um das Gleichgewichtsventil (90, 190) wahlweise zu öffnen oder zu schließen.

12. Spülkasten, der eine Anordnung nach einem der vorhergehenden Ansprüche umfasst, die darin aufgenommen ist.

13. Spülkasten nach Anspruch 12, der ferner eine Steuerventilanordnung zum Betätigen oder Steuern eines Spülsystems umfasst, wobei die Steuerventilanordnung ein Betätigungsventil (101), das mit einem Spülsystem fluidisch verbunden ist oder mit diesem fluidisch verbunden werden kann, und einen Spülaktivator (8) mit einem Einlass und einem Auslass umfasst, der mit dem Betätigungsventil (101) betriebsmäßig verbunden ist, wobei der Spülaktivator betätigt werden kann, um in Verwendung die Fluidverbindung zwischen dem Einlass und dem Auslass zu öffnen, wobei dadurch bewirkt wird, dass sich das Betätigungsventil (101) öffnet und dem Spülsystem Fluid zuführt, um eine Spülwirkung einzuleiten.

14. Spülkasten nach Anspruch 13, wobei der Spülaktivator (8) einen Steuerhebel oder eine -taste oder einen Näherungssensor oder -schalter umfasst.

15. Toilette, die einen Spülkasten nach einem der Ansprüche 12 bis 14 umfasst.

## Revendications

1. Ensemble de vanne de remplissage (9, 109) pour l'intégration dans un système de chasse à réservoir, l'ensemble comprenant une soupape d'équilibrage à flotteur (90, 190) assurant le remplissage du réservoir, et un élément de dérivation (92, 192) connecté par le fluide en amont de la soupape d'équilibrage à flotteur (90, 190), l'élément de dérivation (92, 192) comprenant une sortie (98) pour apporter, en cours d'usage, un débit de fluide à un vérin hydraulique (6) du système de chasse du réservoir.

2. Ensemble selon une quelconque des revendications précédentes, l'élément de dérivation (92, 192) comprenant un clapet anti-retour (96a, 96b) empêchant tout reflux.

3. Ensemble selon une quelconque des revendications précédentes, l'élément de dérivation (92, 192) comprenant un limiteur de débit.

4. Ensemble selon une quelconque des revendications précédentes, l'élément de dérivation (92, 192) comprenant un filtre.

5. Ensemble selon une quelconque des revendications précédentes, l'élément de dérivation (92, 192) comprenant un raccord à emmanchement.

6. Ensemble selon une quelconque des revendications précédentes, l'élément de dérivation (92, 192) pouvant être raccordé dans une de deux ou plusieurs orientations.

7. Ensemble selon une quelconque des revendications précédentes, l'élément de dérivation (92, 192) étant incorporé dans la soupape d'équilibrage à flotteur (90, 190).

8. Ensemble selon la revendication 6 ou la revendication 7, comprenant deux ou plusieurs sorties en amont (90d, 90e, 190d, 190e), chacune desquelles se présentant dans une position et/ou une orientation différente sur ou dans l'ensemble, l'élément de dérivation (92, 192) pouvant être raccordé, de façon sélective, dans une d'une première orientation, dans laquelle l'élément de dérivation (92, 192) est aligné au moins partiellement avec une première des sorties en amont (90d, 90e, 190d, 190e), et une deuxième orientation, dans laquelle l'élément de dérivation (92, 192) est aligné au moins partiellement avec une deuxième des sorties en amont (90d, 90e, 190d, 190e).

9. Ensemble selon une quelconque des revendications 6 à 8, comprenant deux sorties en amont (90d, 90e, 190d, 190e) sur des parties ou côtés opposés de l'ensemble, de sorte que l'élément de dérivation (92, 192) puisse être raccordé à l'ensemble sur un de ses côtés.

10. Ensemble selon une quelconque des revendications précédentes, comprenant en outre un élément de blocage (93) pour fixer l'élément de dérivation (92, 192) sur l'ensemble de vanne de remplissage.

11. Ensemble selon une quelconque des revendications précédentes, comprenant un flotteur (91) monté de façon pivotante relativement à la soupape d'équilibrage (90, 190) par le biais d'un levier fermant de façon sélective un orifice de purge de la soupape d'équilibrage, pour ouvrir ou fermer, de façon sélective, la soupape d'équilibrage (90, 190).

12. Réservoir comprenant un ensemble selon une quelconque des revendications précédentes reçu dans celle-ci.

13. Réservoir selon la revendication 12, comprenant en outre un ensemble de régulateur pour l'utilisation ou la régulation d'un système de chasse, l'ensemble de régulateur comprenant une soupape de commande (101) raccordée, ou pouvant être raccordée, par le fluide à un système de chasse, et un activateur de chasse (8) avec une entrée et une sortie raccordées fonctionnellement à la soupape de commande (101) l'activateur de chasse pouvant être utilisé pour ouvrir, en cours d'usage, une communication par le fluide entre l'entrée et la sortie, en entraînant ainsi l'ouverture de la soupape de commande (101) et l'introduction de fluide dans le système de chasse d'eau pour déclencher une action de chasse.

14. Réservoir selon la revendication 13, l'activateur de chasse (8) comprenant un levier ou un bouton de commande, ou un détecteur ou commutateur de proximité.

15. Toilette comprenant un réservoir selon une quelconque des revendications 12 à 14.
